# EUROPEAN PATENT APPLICATION

(11) **EP 4 439 759 A1**
(43) Date of publication of application: **02.10.2024**
(21) Application number: 21965900.0
(22) Date of filing: 30.11.2021
(51) Int. Cl.: H01M 10/0525, H01M 4/13

(54) **ELECTROCHEMICAL DEVICE AND ELECTRONIC DEVICE**

(71) Applicant: Ningde Amperex Technology Limited, Ningde, Fujian 352100 (CN)
(72) Inventor: WANG, Kai, Ningde, Fujian 352100 (CN); TANG, Jia, Ningde, Fujian 352100 (CN)
(74) Representative: Icosa
(86) International application number: PCT/CN2021/134458
(87) International publication number: WO 2023/097458

(57) **Abstract**

This application relates to an electrochemical device and an electronic device. The electrochemical device includes a positive electrode, wherein the positive electrode includes a positive active material layer, the positive active material layer includes a positive active material, the positive active material includes a first substrate and a first region disposed on a surface of the first substrate, and based on a molar content of a Co element in the first region, a molar percentage X of an M1 element in the first region is ≥ 0.5%, wherein M1 includes at least one of aluminum, magnesium, titanium, zirconium, manganese, lutetium, barium, nickel, lanthanum, yttrium, niobium, tungsten, calcium, sodium, selenium, or sulfur; and a negative electrode, wherein the negative electrode includes a negative active material layer; and the electrochemical device satisfies: 1.3 ≤ P_{negative}/Pₚₒₛᵢₜᵢᵥₑ ≤ 3.5, wherein P_{negative} is a porosity of the negative active material layer, and Pₚₒₛᵢₜᵢᵥₑ is a porosity of the positive active material layer. In this application, the porosity of the positive active material layer, the porosity of the negative active material layer and the surface element content of the positive active material are regulated, so that the electrochemical device has an excellent cycle performance under a high voltage.

## Description

### TECHNICAL FIELD

This application relates to the field of energy storage, and in particular, to an electrochemical device and an electronic device.

### BACKGROUND

Lithium-ion batteries are widely used in electronic products such as laptop computers, cell phones and digital cameras, as well as in equipment such as electric tools, electric bicycles and electric vehicles. As the application fields of the lithium-ion batteries continue to expand, the requirements for the energy density of the lithium-ion batteries are becoming higher and higher. Currently, the prior art is mainly to improve the energy density of the lithium-ion batteries by increasing the working voltage of the lithium-ion batteries. However, charging and discharging at high voltages easily lead to irreversible phase transformation and structural collapse of active materials, and the active materials are likely to react with electrolyte solutions, resulting in destruction of the surface and gas production, which affects the safety performance and service life of the lithium-ion batteries.

### SUMMARY

In view of the above problems existing in the prior art, this application provides an electrochemical device and an electronic device including the electrochemical device, so as to improve the cycle performance of the electrochemical device under a high voltage.

In a first aspect, this application provides an electrochemical device. The electrochemical device includes a positive electrode and a negative electrode. The positive electrode includes a positive active material layer, the positive active material layer includes a positive active material, the positive active material includes a first substrate and a first region disposed on a surface of the first substrate, and based on a molar content of a Co element in the first region, a molar percentage X of an M1 element in the first region is ≥ 0.5%, where M1 includes at least one of aluminum (Al), magnesium (Mg), titanium (Ti), zirconium (Zr), manganese (Mn), lutetium (Lu), barium (Ba), nickel (Ni), lanthanum (La), yttrium (Y), niobium (Nb), tungsten (W), calcium (Ca), sodium (Na), selenium (Se), or sulfur (S). The negative electrode includes a negative active material layer, and the negative active material layer includes a negative active material. The electrochemical device satisfies: 1.3 ≤ P_{negative}/Pₚₒₛᵢₜᵢᵥₑ ≤ 3.5, where P_{negative} is a porosity of the negative active material layer, and Pₚₒₛᵢₜᵢᵥₑ is a porosity of the positive active material layer. The inventors of this application have found that in a high-voltage cycling process, a decline rate on a positive electrode side of the electrochemical device is accelerated to exceed that of a negative electrode, so that a potential of a positive electrode will be continuously raised, which will cause an imbalance of cell balance (CB), and further accelerate the decline of the positive electrode. In this application, on the one hand, by controlling a ratio between the porosity of the negative active material layer and the porosity of the positive active material layer within the above range, it is avoided that the porosity of the positive active material layer is too low or too high. Too low porosity will cause insufficient infiltration of an electrolyte solution, and by-products will quickly plug pores, leading to a sharp increase in polarization, which will raise the potential of the positive electrode. When the porosity of the positive active material layer is too high, a side reaction between the surface of the positive active material and the electrolyte solution is intensified, and the by-products on the surface of the positive active material are thickened rapidly, leading to a sharp increase in polarization, which will raise the potential of the positive electrode. In addition, excessive by-products also cause the positive active material to be too low in content or unevenly distributed, bringing about a loss of energy density. On the other hand, by controlling the content of the M1 element in the first region of the surface of the positive active material within the above range, the decline rate of the surface of the positive active material can be reduced, so that a decline rate of the negative electrode matches that of the positive electrode in the high-voltage cycling process, an excessively rapid increase in the polarization of the positive electrode is avoided, and the cycle life of the electrochemical device under a high voltage is greatly prolonged.

According to some implementations of this application, 9% ≤ Pₚₒₛᵢₜᵢᵥₑ ≤ 25%. According to some implementations of this application, 20% ≤ P_{negative} ≤ 45%.

According to some implementations of this application, the negative active material includes a second substrate and a second region disposed on a surface of the second substrate, and based on a molar content of a carbon (C) element in the second region, a molar percentage Y of an M2 element in the second region is ≤ 0.6%, where M2 includes nitrogen and/or boron. When the surface of the negative active material has a certain amount of nitrogen and/or boron elements, the interfacial tension between the electrolyte solution and the surface of the negative active material can be reduced, which is conducive to the infiltration of the electrolyte solution and the lowering of the polarization, so that lithium ions that are de-intercalated from the positive active material can smoothly enter into the negative active material without causing structure collapse.

According to some implementations of this application, the negative active material includes mesopores, a pore diameter of the mesopores is from 2 nm to 50 nm, and based on a mass of the negative active material, a pore volume of the mesopores is V cm³/g, where 0.01 ≤ V ≤ 0.07. The pore diameter distribution and pore volume of the negative active material are related to a lithium intercalation capacity and a lithium intercalation speed. Since a radius of lithium ions is 0.07 nm, an interlayer spacing of the negative active material such as graphite is generally greater than 0.335 nm, and the pore diameter of the mesopore is ≥ 2 nm, thus, the lithium ions are easily transferred to the negative active material such as a graphite layer through the mesopores, and at the same time, the mesopores also have a certain capacity of storing the lithium ions, so the mesopores of a certain pore volume can improve the lithium intercalation capacity and the lithium intercalation speed of the negative active material. If the lithium intercalation speed of the negative active material is high, the polarization caused by the accumulation of the lithium ions on the surface of the negative active material is small, a potential difference between the positive active material and the negative active material is small, and the positive active material is not likely to be excessively de-intercalated due to the raised potential of the negative active material, which is conducive to the protection of the positive active material. However, when the pore volume of the mesopores is greater than 0.07 cm³/g, a specific surface area of the negative active material is increased, and a reaction interface between the surface of the negative active material and the electrolyte solution is increased, resulting in an increase of a lithium amount consumed by initial formation of an SEI film and destruction and repairing of an SEI in the cycling process, and thus, the potential of the positive electrode is raised, and the cycle performance is reduced.

According to some implementations of this application, the negative active material includes amorphous carbon, and based on a mass of the negative active material, a mass percentage of the amorphous carbon is from 0.5% to 5%. By controlling the content of the amorphous carbon within the above range, on the one hand, a stable amorphous carbon layer is conducive to the rapid de-intercalation and intercalation of the lithium ions; and on the other hand, the amorphous carbon is likely to react with the electrolyte solution to generate a certain thickness of stable solid electrolyte interface (SEI) film, which is conducive to blocking the accumulation of the by-products. In addition, controlling the content of the amorphous carbon within the above range can prevent excessive Li consumption and avoid the reduction of the first efficiency of the electrochemical device.

According to some implementations of this application, the first region includes at least one of a metal oxide, a metal phosphate, a metal fluoride or a non-metallic simple substance.

According to some implementations of this application, the metal oxide includes at least one of Al₂O₃, MgO, TiO₂, La₂O₃, Y₂O₃, ZrO₂, WO₃, MnO₂ or Ni₂O₃.

According to some implementations of this application, the metal phosphate includes at least one of Li₃PO₄, AlPO₄, Ca₃(PO₄)₂ or Na₃PO₄.

According to some implementations of this application, the metal fluoride includes at least one of AlF₃, MgF₂, CaF₂ or LiF.

According to some implementations of this application, the non-metallic simple substance includes an Se simple substance and/or an S simple substance.

According to some implementations of this application, a total mole number of metal elements other than Li in the first substrate is n_{M}, a mole number of an Ni element in the first substrate is n_{Ni}, a mole number of a Co element in the first substrate is n_{Co}, a mole number of an Mn element in the first substrate is n_{Mn}, and a mole number of an R element in the first substrate is n_{R}, 0 ≤ n_{Ni}/n_{M} ≤ 1, 0 ≤ n_{Co}/n_{M} ≤ 1, 0 ≤ n_{Mn}/n_{M} ≤ 1, and 0 ≤ n_{R}/n_{M} ≤ 1, where n_{Ni}, n_{Co} and n_{Mn} are not simultaneously 0, and the R element includes at least one of Na, Al, Mg, Ti, Zr, Nb, Y, Cr, V, Ge, Mo, Fe, Cu, Zn, Ga, Ag, W, In, Sn, Pb, Sb, La, Ce, Ca, or Sr.

According to some implementations of this application, the positive active material has a specific surface area of ≤ 0.5 m²/g.

According to some implementations of this application, the positive electrode is assembled with lithium metal to form a button cell, the button cell has a capacity of C1 in a voltage range of 4.6 V to 4.7 V, and the button cell has a capacity of C2 in a voltage range of 4.5 V to 4.6 V, where 1.5 ≤ C1/C2 ≤ 2.2.

In a second aspect, this application provides an electronic device, including the electrochemical device in the first aspect.

In this application, a ratio between the porosity of the negative active material layer and the porosity of the positive active material layer and the content of the M1 element in the first region on the surface of the positive active material are regulated, so that in the high-voltage cycling process of the electrochemical device, the decline rate of the negative electrode matches that of the positive electrode, the CB of the electrochemical device remains stable, raising of the potential of the positive electrode is reduced, and the constant acceleration of the decline of the positive electrode is inhibited, thereby greatly prolonging the cycle life of the electrochemical device under the high voltage.

### BRIEF DESCRIPTION OF DRAWINGS

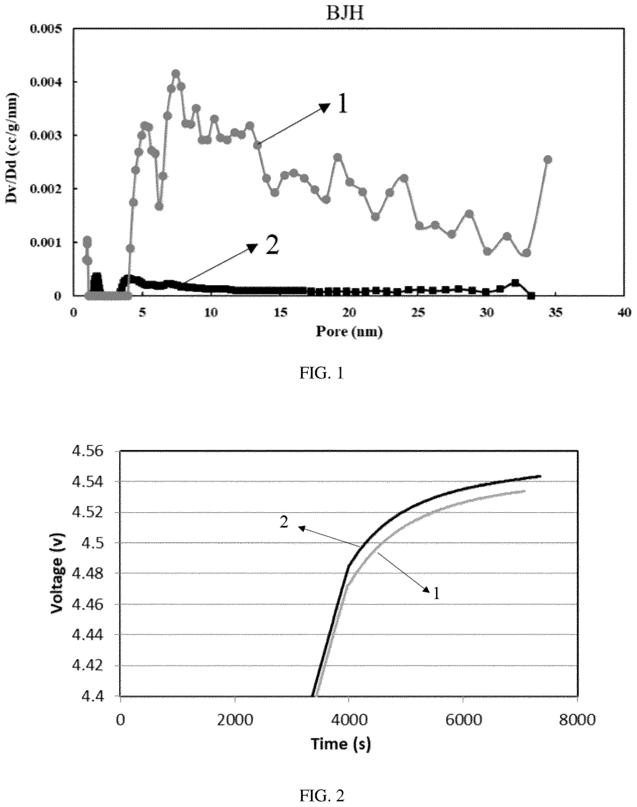

FIG. 1 shows a pore size distribution diagram of negative active materials of lithium-ion batteries of Embodiment 1 and Comparative Embodiment 1.
FIG. 2 shows a diagram of change in positive electrode potential of the lithium-ion batteries of Embodiment 1 and Comparative Embodiment 1.

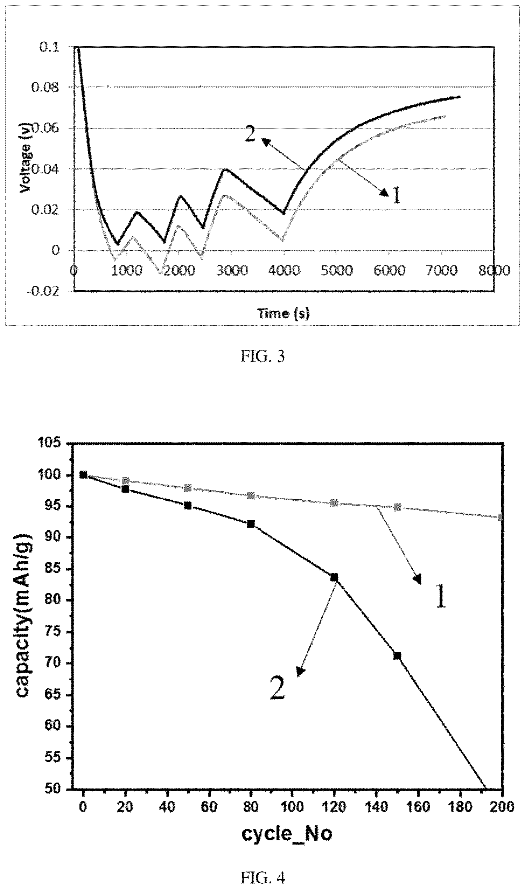

FIG. 3 shows a diagram of change in negative electrode potential of the lithium-ion batteries of Embodiment 1 and Comparative Embodiment 1.
FIG. 4 shows a cycle capacity retention rate of the lithium-ion batteries of Embodiment 1 and Comparative Embodiment 1.

Reference Numerals: 1-Embodiment 1, and 2-Comparative Embodiment 1

### DETAILED DESCRIPTION OF EMBODIMENTS

To make the objectives, technical solutions, and advantages of this application clearer, the following clearly and completely describes the technical solutions of this application with reference to embodiments. Apparently, the described embodiments are merely some rather than all of embodiments of this application. The relevant embodiments described herein are illustrative and are intended to provide a basic understanding of this application. The embodiments of this application should not be construed as a limitation of this application.

For the sake of brevity, only some numerical ranges are specifically disclosed herein. However, any lower limit can be combined with any upper limit to form an unspecified range; and any lower limit can be combined with other lower limits to form an unspecified range, and likewise any upper limit can be combined with any other upper limit to form an unspecified range. In addition, each individually disclosed point or individual value itself can be used as a lower limit or upper limit to be combined with any other point or individual value or combined with other lower limit or upper limit to form an unspecified range.

In the description herein, unless otherwise specified, "above" and "below" include this number.

Unless otherwise specified, terms used in this application have the well-known meanings commonly understood by those skilled in the art. Unless otherwise specified, the values of the various parameters referred to in this application can be measured by various measurement methods commonly used in the field (e.g., can be tested in accordance with methods given in the embodiments of this application).

A list of items connected by the terms "one of", "at least one of", "at least one type of", or other similar terms may imply any combination of the items listed. For example, if items A and B are listed, the phrase "at least one of A and B" means A only; B only; or A and B. In another example, if items A, B, and C are listed, then the phrase "at least one of A, B, and C" means A only; B only; C only; A and B (excluding C); A and C (excluding B); B and C (excluding A); or all of A, B, and C. Item A may include a single component or a plurality of components. Item B may include a single component or a plurality of components. Item C may include a single component or a plurality of components.

In a first aspect, this application provides an electrochemical device. The electrochemical device includes a positive electrode and a negative electrode. The positive electrode includes a positive active material layer, the positive active material layer includes a positive active material, the positive active material includes a first substrate and a first region disposed on a surface of the first substrate, and based on a molar content of a Co element in the first region, a molar percentage X of an M1 element in the first region is ≥ 0.5%, where M1 includes at least one of Al, Mg, Ti, Zr, Mn, Lu, Ba, Ni, La, Y, Nb, W, Ca, Na, Se or S. The negative electrode includes a negative active material layer, and the negative active material layer includes a negative active material. The electrochemical device satisfies: 1.3 ≤ P_{negative}/Pₚₒₛᵢₜᵢᵥₑ ≤ 3.5, where P_{negative} is a porosity of the negative active material layer, and Pₚₒₛᵢₜᵢᵥₑ is a porosity of the positive active material layer. The inventors of this application have found that in a high-voltage cycling process, a decline rate on a positive electrode side of the electrochemical device is accelerated to exceed that of a negative electrode, so that a potential of a positive electrode will be continuously raised, which will cause an imbalance of CB, and further accelerate the decline of the positive electrode. In this application, on the one hand, by controlling a ratio between the porosity of the negative active material layer and the porosity of the positive active material layer within the above range, it is avoided that the porosity of the positive active material layer is too low or too high. Too low porosity will cause insufficient infiltration of an electrolyte solution, and by-products will quickly plug pores, leading to a sharp increase in polarization, which will raise the potential of the positive electrode. When the porosity of the positive active material layer is too high, a side reaction between the surface of the positive active material and the electrolyte solution is intensified, and the by-products on the surface of the positive active material are thickened rapidly, leading to a sharp increase in polarization, which will raise the potential of the positive electrode. In addition, excessive by-products also cause the positive active material to be too low in content or unevenly distributed, bringing about a loss of energy density. On the other hand, by controlling the content of the M1 element in the first region of the surface of the positive active material within the above range, the decline rate of the surface of the positive active material can be reduced, so that a decline rate of the negative electrode matches that of the positive electrode in the high-voltage cycling process, an excessively rapid increase in the polarization of the positive electrode is avoided, and the cycle life of the electrochemical device under a high voltage is greatly prolonged.

The "first region" in this application may refer to a region of 0.15 µm ± 0.02 µm in a direction from an outer surface of a positive active material particle to a center of the positive active material particle.

According to some implementations of this application, P_{negative}/Pₚₒₛᵢₜᵢᵥₑ is 1.4, 1.5, 1.6, 1.7, 1.8, 1.9, 2.0, 2.1, 2.2, 2.3, 2.4, 2.6, 2.7, 2.8, 2.9, 3.1, 3.2, 3.3, or a range formed by any two thereof. When P_{negative}/Pₚₒₛᵢₜᵢᵥₑ is too small, the side reaction between the surface of the positive active material and the electrolyte solution is intensified, and the by-products on the surface of the positive active material are thickened, which can easily cause an increase in polarization, leading to the continuous raising of the potential of the positive electrode, accelerating the decline of the positive electrode, and then making the decline of the cycle performance accelerated. When P_{negative}/Pₚₒₛᵢₜᵢᵥₑ is too large, the porosity of the positive active material layer is too low, infiltration of the electrolyte solution is insufficient, and the by-products will quickly plug the pores, leading to a sharp increase in polarization, causing the raising rate of the potential of the positive electrode to accelerate, and likewise causing the decline of the positive electrode to accelerate. In some implementations, 2.0 ≤ P_{negative}/Pₚₒₛᵢₜᵢᵥₑ ≤ 3.0.

According to some implementations of this application, based on the molar content of the Co element in the first region, the molar percentage X of the M1 element in the first region satisfies 0.5% ≤ X ≤ 8.0%. In some implementations, X is 0.6%, 0.8%, 1.0%, 2.0%, 3.0%, 4.0%, 5.0%, 6.0%, 7.0%, 8.0%, or a range formed by any two thereof. In some implementations, 0.5% ≤ X ≤ 2.5%.

According to some implementations of this application, 9% ≤ Pₚₒₛᵢₜᵢᵥₑ ≤ 25%. In some implementations, Pₚₒₛᵢₜᵢᵥₑ is 10%, 11%, 12%, 13%, 14%, 15%, 16%, 17%, 18%, 19%, 20%, 21%, 22%, 23%, 24%, or a range formed by any two thereof. In some implementations, 9% ≤ Pₚₒₛᵢₜᵢᵥₑ ≤ 18%.

According to some implementations of this application, 20% ≤ P_{negative} ≤ 45%. In some implementations, P_{negative} is 22%, 24%, 25%, 27%, 29%, 30%, 32%, 35%, 37%, 39%, 40%, 42%, 44%, or a range formed by any two thereof. In some implementations, 25% ≤ P_{negative} ≤ 35%.

According to some implementations of this application, the negative active material includes a second substrate and a second region disposed on a surface of the second substrate, and based on a molar content of a C element in the second region, a molar percentage Y of an M2 element in the second region is ≤ 0.6%, where M2 includes nitrogen and/or boron. When the surface of the negative active material has a certain amount of nitrogen and/or boron elements, the interfacial tension between the electrolyte solution and the surface of the negative active material can be reduced, which is conducive to the infiltration of the electrolyte solution and the lowering of the polarization, so that lithium ions that are de-intercalated from the positive active material can smoothly enter into the negative active material without causing structure collapse. In some implementations, 0.01% ≤ Y ≤ 0.6%. In some implementations, Y is 0.05%, 0.1%, 0.15%, 0.2%, 0.25%, 0.3%, 0.35%, 0.4%, 0.45%, 0.5%, 0.55%, or a range formed by any two thereof.

The "second region" in this application may refer to a region of 0.15 µm ± 0.02 µm in a direction from an outer surface of a negative active material particle to a center of the negative active material particle.

According to some implementations of this application, the negative active material includes mesopores, a pore diameter of the mesopores is from 2 nm to 50 nm, and a pore volume of the mesopores is V cm³/g, where 0.01 ≤ V ≤ 0.07. The pore diameter distribution and pore volume of the negative active material are related to a lithium intercalation capacity and a lithium intercalation speed. Since a radius of lithium ions is 0.07 nm, an interlayer spacing of the negative active material such as graphite is generally greater than 0.335 nm, and the pore diameter of the mesopore is ≥ 2 nm, thus, the lithium ions are easily transferred to the negative active material such as a graphite layer through the mesopores, and at the same time, the mesopores also have a certain capacity of storing the lithium ions, so the mesopores of a certain pore volume can improve the lithium intercalation capacity and the lithium intercalation speed of the negative active material. If the lithium intercalation speed of the negative active material is high, the polarization caused by the accumulation of the lithium ions on the surface of the negative active material is small, a potential difference between the positive active material and the negative active material is small, and the positive active material is not likely to be excessively de-intercalated due to the raised potential of the negative active material, which is conducive to the protection of the positive active material. However, when the pore volume of the mesopores is greater than 0.07 cm³/g, a specific surface area of the negative active material is increased, and a reaction interface between the surface of the negative active material and the electrolyte solution is increased, resulting in an increase of a lithium amount consumed by initial formation of an SEI film and destruction and repairing of an SEI in the cycling process, and thus, the potential of the positive electrode is raised, and the cycle performance is reduced. According to some implementations of this application, V is 0.02, 0.025, 0.035, 0.04, 0.045, 0.05, 0.055, 0.06, 0.065, or a range formed by any two thereof.

According to some implementations of this application, the negative active material includes amorphous carbon, and based on a mass of the negative active material, a mass percentage of the amorphous carbon is from 0.5% to 5%. By controlling the content of the amorphous carbon within the above range, on the one hand, a stable amorphous carbon layer is conducive to the rapid de-intercalation and intercalation of the lithium ions; and on the other hand, the amorphous carbon is likely to react with the electrolyte solution to generate a certain thickness of stable SEI film, which is conducive to blocking the accumulation of the by-products. In addition, controlling the content of the amorphous carbon within the above range can prevent excessive Li consumption and avoid the reduction of the first efficiency of the electrochemical device. According to some implementations of this application, the mass percentage of the amorphous carbon is 1.0%, 1.5%, 2.0%, 2.5%, 3.0%, 3.5%, 4.0%, 4.5%, or a range formed by any two thereof.

According to some implementations of this application, the first region includes at least one of a metal oxide, a metal phosphate, a metal fluoride or a non-metallic simple substance.

According to some implementations of this application, the metal oxide includes at least one of Al₂O₃, MgO, TiO₂, La₂O₃, Y₂O₃, ZrO₂, WO₃, MnO₂ or Ni₂O₃.. According to some implementations of this application, the metal phosphate includes at least one of Li₃PO₄, AlPO₄, Ca₃(PO₄)₂ or Na₃PO₄. According to some implementations of this application, the metal fluoride includes at least one of AlF₃, MgF₂, CaF₂ or LiF. According to some implementations of this application, the non-metallic simple substance includes an Se simple substance and/or an S simple substance.

According to some implementations of this application, a total mole number of metal elements other than Li in the first substrate is n_{M}, a mole number of an Ni element in the first substrate is n_{Ni}, a mole number of a Co element in the first substrate is n_{Co}, a mole number of an Mn element in the first substrate is n_{Mn}, and a mole number of an R element in the first substrate is n_{R}, 0 ≤ n_{Ni}/n_{M} ≤ 1, 0 ≤ n_{Co}/n_{M} ≤ 1, 0 ≤ n_{Mn}/n_{M} ≤ 1, and 0 ≤ n_{R}/n_{M} ≤ 1, where n_{Ni}, n_{Co} and n_{Mn} are not simultaneously 0, and the R element includes at least one of Na, Al, Mg, Ti, Zr, Nb, Y, Cr, V, Ge, Mo, Fe, Cu, Zn, Ga, Ag, W, In, Sn, Pb, Sb, La, Ce, Ca, or Sr. In some implementations, 0 ≤ n_{Ni}/n_{M} ≤ 0.4, 0.6 ≤ n_{Co}/n_{M} ≤ 1, 0 ≤ n_{Mn}/n_{M} ≤ 0.4, 0 ≤ n_{R}/n_{M} ≤ 0.4.

According to some implementations of this application, the positive active material has a specific surface area of ≤ 0.5 m²/g. In some implementations, the specific surface area of the positive active material is 0.05 m²/g, 0.1 m²/g, 0.15 m²/g, 0.2 m²/g, 0.25 m²/g, 0.3 m²/g, 0.4 m²/g, or a range formed by any two thereof.

According to some implementations of this application, the positive electrode is assembled with lithium metal to form a button cell, the button cell has a capacity of C1 in a voltage range of 4.6 V to 4.7 V, and the button cell has a capacity of C2 in a voltage range of 4.5 V to 4.6 V, where 1.5 ≤ C1/C2 ≤ 2.2.

According to some implementations of this application, the positive active material layer further includes a conductive agent and a binder. In some embodiments, the binder includes, but is not limited to, polyvinyl alcohol, hydroxypropyl cellulose, diacetyl cellulose, polyvinyl chloride, carboxylated polyvinyl chloride, polyvinyl fluoride, a polymer including ethylidene oxygen, polyvinylpyrrolidone, polyurethane, polytetrafluoroethylene, 1,1-polyvinylidene fluoride, polyethylene, polypropylene, styrene-butadiene rubber, acrylated styrene-butadiene rubber, epoxy resin, nylon and the like. In some embodiments, the conductive agent includes, but is not limited to: a carbon-based material, a metal-based material, a conductive polymer, and mixtures thereof. In some embodiments, the carbon-based material is selected from natural graphite, artificial graphite, carbon black, acetylene black, Ketjen black, carbon nanotubes, carbon fiber, graphene, or any combination thereof. In some embodiments, the metal-based material is selected from metal powders, metal fibers, copper, nickel, aluminum, or silver. In some embodiments, the conductive polymer is a polyphenylene derivative.

According to some implementations of this application, the positive electrode further includes a positive current collector, and the positive current collector may be metal foil or a composite current collector. For example, aluminum foil may be used. The composite current collector may be formed by forming a metal material (copper, copper alloy, nickel, nickel alloy, titanium, titanium alloy, silver, silver alloy, and the like) on a polymer substrate.

According to some implementations of this application, the negative active material layer further includes a conductive agent and a binder. In some embodiments, the binder may include various binder polymers. In some implementations, the binder includes at least one of polyvinylidene fluoride, vinylidene fluoride-hexafluoropropylene copolymer, polyamide, polyacrylonitrile, polyacrylate, polyacrylic acid, polyacrylate salt, sodium carboxymethyl cellulose, polyvinylpyrrolidone, polyvinyl ether, polymethyl methacrylate, polytetrafluoroethylene, polyhexafluoropropylene, or styrene-butadiene rubber. In some embodiments, the conductive agent may use any conductive material, as long as it does not cause a chemical change. In some embodiments, the conductive agent includes at least one of conductive carbon black, acetylene black, carbon nanotubes, Ketjen black, carbon fiber, or graphene.

According to some implementations of this application, the negative electrode further includes a negative current collector, and the negative current collector may be copper foil, nickel foil, stainless steel foil, titanium foil, nickel foam, copper foam, a polymer substrate coated with a conductive metal, or a combination thereof.

The electrochemical device of this application further include an electrolyte solution, and the electrolyte solution includes a lithium salt and a non-aqueous solvent.

In some implementation solutions of this application, the lithium salt is selected from one or more of LiPF₆, LiBF₄, LiAsF₆, LiClO₄, LiB(C₆H₅)₄, LiCH₃SO₃, LiCF₃SO₃, LiN(SO₂CF₃)₂, LiC(SO₂CF₃)₃, LiSiF₆, LiBOB, and lithium difluoroborate. For example, the lithium salt may use LiPF₆.

The non-aqueous solvent may be a carbonate compound, a carboxylic ester compound, an ether compound, other organic solvents, or combinations thereof.

The foregoing carbonate compound may be a chain carbonate compound, a cyclic carbonate compound, a fluorocarbonate compound, or a combination thereof.

Examples of the foregoing chain carbonate compound are dimethyl carbonate (DMC), diethyl carbonate (DEC), dipropyl carbonate (DPC), methyl propyl carbonate (MPC), ethyl propyl carbonate (EPC), methyl ethyl carbonate (MEC), and a combination thereof. Examples of the cyclic carbonate compound are ethylene carbonate (EC), propylene carbonate (PC), butene carbonate (BC), vinyl ethylene carbonate (VEC), and a combination thereof. Examples of the fluorocarbonate compound are fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methyl-butene carbonate, 1-fluoro-1-methyl-butene carbonate, 1,2-difluoro-1-methyl-butene carbonate, 1,1,2-trifluoro-2-methyl-butene carbonate, trifluoro-methyl-butene carbonate, and a combination thereof.

Examples of the foregoing carboxylate compound are methyl formate, methyl acetate, ethyl acetate, n-propyl acetate, tert-butyl acetate, methyl propionate, ethyl propionate, propyl propionate, γ-butyrolactone, decalactone, valerolactone, mevalonic acid lactone, caprolactone, and a combination thereof.

Examples of the above ether compound are dibutyl ether, tetraglyme, diglyme, 1, 2-dimethoxyethane, 1, 2-diethoxyethane, ethoxymethoxyethane, 2-methyl tetrahydrofuran, tetrahydrofuran, and a combination thereof.

Examples of the above other organic solvents are dimethyl sulfoxide, 1, 2-dioxolane, sulfolane, methyl sulfolane, 1, 3-dimethyl-2-imidazolidinone, N-methyl-2-pyrrolidone, formamide, dimethylformamide, acetonitrile, trimethyl phosphate, triethyl phosphate, trioctyl phosphate, phosphate and a combination thereof.

polyacrylonitrilepolyacrylonitrilepolyacrylonitrilepolyacrylonitrileAccording to some implementations of this application, the electrochemical device is provided with a separator between the positive electrode and the negative electrode to prevent a short circuit. The material and shape of the separator used in embodiments of this application are not specifically limited and may be of any technique disclosed in the prior art. In some embodiments, the separator includes a polymer or an inorganic substance formed from a material that is stable to the electrolyte solution of this application. For example, the separator may include a substrate layer and a surface treatment layer. The substrate layer is a non-woven fabric, a film or a composite film with a porous structure, and a material of the substrate layer includes at least one of polyethylene, polypropylene, polyethylene terephthalate and polyimide. Specifically, a polypropylene porous film, a polyethylene porous film, a polypropylene non-woven fabric, a polyethylene non-woven fabric or a polypropylene-polyethylene-polypropylene porous composite film may be used. The surface treatment layer is disposed on at least one surface of the substrate layer, and the surface treatment layer may be a polymer layer or an inorganic substance layer and may also be a mixed layer formed by a polymer and an inorganic substance. The inorganic substance layer includes inorganic particles and a binder. The inorganic particles include at least one of aluminum oxide, silicon oxide, magnesium oxide, titanium oxide, hafnium dioxide, tin oxide, cerium dioxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder includes at least one of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene or polyhexafluoropropylene. The polymer layer includes a polymer, and a material of the polymer includes at least one of polyamide, polyacrylonitrile, acrylate polymer, polyacrylic acid, polyacrylate, polyvinylpyrrolidone, polyvinyl ether, polyvinylidene fluoride, or poly(vinylidene fluoride-hexafluoropropylene).

According to some implementations of this application, the electrochemical device of this application includes, but is not limited to: all kinds of primary batteries, secondary batteries, fuel batteries, solar batteries, or capacitors. In some embodiments, the electrochemical device is a lithium secondary battery. In some embodiments, the lithium secondary battery includes, but is not limited to: a lithium metal secondary battery, a lithium ion secondary battery, a lithium polymer secondary battery, and a lithium ion polymer secondary battery.

In a second aspect, an electronic device of this application may be any device using the electrochemical device in the first aspect of this application.

In some embodiments, the electronic device includes, but is not limited to, a notebook computer, a pen-input computer, a mobile computer, an electronic book player, a portable phone, a portable fax machine, a portable copier, a portable printer, a headphone, a video recorder, a liquid crystal television, a hand-held cleaner, a portable CD machine, a mini disc, a transceiver, an electronic organizer, a calculator, a memory card, a portable audio recorder, a radio, a backup power supply, a motor, an automobile, a motorcycle, a power bicycle, a bicycle, a lighting appliance, a toy, a game machine, a clock, an electric tool, a flash light, a camera, a large household storage battery, a lithium-ion capacitor, etc.

### Embodiment and Comparative Embodiment

### (1) Preparation of positive active material

Step 1: a precursor (cobalt tetraoxide doped with metal elements, Dv50 of the precursor, the type of doped metal elements and the mass percentage of doped metal elements based on the precursor being shown in Table 1) and lithium carbonate are mixed uniformly according to a molar ratio of lithium to (doped metal elements + Co) of 1.05:1, put into a muffle furnace, sintered for 12 h after the temperature is increased to 1000 °C according to a procedure of a temperature increase rate of 5 °C/minute at an air flow rate of 20 L/min, cooled to room temperature, ground and sieved (sieving standard being 400 meshes) to obtain an intermediate.

Step 2: the obtained intermediate and a coating additive (see Table 1 for the type and content of the additive) containing an M element are mixed uniformly, put into the muffle furnace, sintered for a period of time after the temperature is increased to the sintering temperature according to a procedure of a temperature increase rate of 5 °C/minute at an air flow rate of 20 L/min, cooled to room temperature, ground and sieved (sieving standard being 400 meshes) to obtain a positive active material.

**Table 1**

| Embodiment and Comparative Embodiment | Precursor | | | Coating additive | | | Sintering condition in step 2 | |
|---|---|---|---|---|---|---|---|---|
| | Dv50/ µm | Doped element | Mass percentage of doped element /% | Type | M element and molar ratio | Mass ratio of M element to intermediate | Sintering temperature °C | Sintering time h |
| Embodiment 1 | 22 | Al | 1.40 | MgF₂+AlF₃ | Mg:Al = 1:1 | 1:100 | 800 | 8 |
| Embodiment 2 | 22 | Al | 1.40 | MgF₂+AlF₃ | Mg:Al=1:1 | 1:100 | 800 | 8 |
| Embodiment 3 | 22 | Al | 1.40 | MgF₂+AlF₃ | Mg:Al=1:1 | 1:100 | 800 | 8 |
| Embodiment 4 | 9 | Al | 1.40 | MgF₂+AlF₃ | Mg:Al=1:1 | 1:100 | 800 | 8 |
| Embodiment 5 | 22 | Al | 1.40 | AlPO₄ | Al | 1:102 | 750 | 8 |
| Embodiment 6 | 22 | Al | 1.40 | La₂O₃+Nb₂O₅+Ca(NO₃)₂ | La:Nb:Ca = 5:2:3 | 1:98 | 900 | 12 |
| Embodiment 7 | 22 | Al | 1.40 | MgF₂+AlF₃ | Mg:Al=1:1 | 1:500 | 800 | 8 |
| Embodiment 8 | 22 | Al | 1.40 | MgF₂+AlF₃ | Mg:Al=1:1 | 2.6:100 | 800 | 8 |
| Embodiment 9 | 22 | Al | 1.40 | MgF₂+AlF₃ | Mg:Al=1:1 | 1:100 | 800 | 8 |
| Embodiment 10 | 22 | Al | 1.40 | MgF₂+AlF₃ | Mg:Al=1:1 | 1:100 | 800 | 8 |
| Embodiment 11 | 22 | Al | 1.40 | MgF₂+AlF₃ | Mg:Al=1:1 | 1:100 | 800 | 8 |
| Embodiment 12 | 22 | Al | 1.40 | MgF₂+AlF₃ | Mg:Al=1:1 | 1:100 | 800 | 8 |
| Embodiment 13 | 22 | Al | 1.40 | MgF₂+AlF₃ | Mg:Al=1:1 | 1:100 | 800 | 8 |
| Embodiment 14 | 22 | Al | 1.40 | MgF₂+AlF₃ | Mg:Al=1:1 | 1:100 | 800 | 8 |
| Embodiment 15 | 22 | Al | 1.40 | MgF₂+AlF₃ | Mg:Al=1:1 | 1:100 | 800 | 8 |
| Embodiment 16 | 22 | Al | 1.50 | Nano Se Powder | Se | 0.28:100 | 400 | 4 |
| Embodiment 17 | 22 | La:Mn:Ni with a molar ratio of 1:1:0.5 | 2.50 | ZrO₂+Nano S powder+W₂O₃ | Zr:S:W = 1:3:1 | 0.52:100 | 400 | 4 |
| Embodiment 18 | 9 | Al | 1.40 | MgF₂+AlF₃ | Mg:Al=1:1 | 1:100 | 800 | 8 |
| Comparative Embodiment 1 | 22 | Al | 1.40 | MgF₂+AlF₃ | Mg:Al=1:1 | 1:100 | 800 | 8 |
| Comparative Embodiment 2 | 22 | Al | 1.40 | MgF₂+AlF₃ | Mg:Al=1:1 | 1:100 | 800 | 8 |
| Comparative Embodiment 3 | 22 | Al | 1.40 | Co(OH)₂ | Co | 1:100 | 750 | 8 |
| Comparative Embodiment 4 | 22 | - | - | Co(OH)₂ | Co | 1:100 | 750 | 8 |

### (2) Preparation of negative active material

### Embodiment 1

Step 1) A graphite precursor (needle coke) is placed in a jaw crusher to be crushed into particles with an average particle size Dv50 of 1 mm, and then the crushed particles (needle coke) are pulverized and graded in an air flow pulverizer to obtain particles with an average particle size Dv50 of 8 µm and Dv99 ≤ 30 µm. The crushed particles are placed in a lengthwise graphitization furnace with a graphitization temperature of 3000 °C and graphitization time of 20 days, so as to obtain graphite primary particles.

Step 2) Preparation of secondary particles: the particles with the particle size Dv50 of 8 µm obtained after pulverizing and grading the graphite precursor in step 1) are taken and mixed with asphalt according to a mass ratio of 10:1, and then graphitization is carried out in the graphitization furnace with a graphitization temperature of 3000 °C and graphitization time of 20 days, so as to obtain graphite secondary particles.

Step 3) Preparation of amorphous carbon coated particles: the graphite primary particles obtained in step 1 and amorphous carbon precursor asphalt are mixed according to a mass ratio of 97:3, and then put into a carbonization furnace and carbonized at 800 °C for 8 h, so as to obtain amorphous carbon coated particles.

Step 4) The amorphous carbon coated particles obtained in step 3) and the secondary particles obtained in step 2) are mixed with a nitrogen-containing compound (melamine) and a boron-containing compound (boric acid) according to a certain ratio, and then sintered in the carbonization furnace with a sintering temperature of 800 °C, and sintering time of 4 h, so as to obtain a negative active material containing nitrogen and boron.

Dv50 of the graphite primary particles in step 1) is 8 µm.

Dv50 of the graphite secondary particles in step 2) is 16 µm.

In step 4), the amorphous carbon coated particles are mixed with the secondary particles according to the mass ratio of 3:7, and Dv50 after mixing is 14 µm. A mixture of the amorphous carbon coated particles and the secondary particles is mixed with the nitrogen-containing compound (melamine) and the boron-containing compound (boric acid) according to a mass ratio of 90:5:5.

A preparation method for a negative active material in Embodiment 2 differs from that in Embodiment 1 in that a sintering temperature is increased to 900 °C and sintering time is 5 h in step 4.

A preparation method for a negative active material in Embodiment 3 differs from that in Embodiment 1 in that a sintering temperature is decreased to 750 °C in step 4.

A preparation method for a negative active material in Comparative Embodiment 2 is the same as that in Embodiment 3.

A preparation method for a negative active material in Comparative Embodiment 1 differs from that in Embodiment 1 in that a sintering temperature is decreased to 600 °C in step 4.

A preparation method for a negative active material in Embodiment 18 is the same as that in Comparative Embodiment 1.

A preparation method for a negative active material in Embodiment 4 to Embodiment 8, Embodiment 11 to Embodiment 12, and Embodiment 16 to Embodiment 17 is the same as that in Embodiment 1.

Mass contents of the nitrogen element and the boron element are controlled by adjusting the amount of the nitrogen-containing compound and/or the boron-containing compound in Embodiment 9 to Embodiment 10. In step 4), a mass ratio of the mixture of the amorphous carbon coated particles and the secondary particles to the nitrogen-containing compound (melamine) to the boron-containing compound (boric acid) is 99:1:0, and 85:10:5.

The mass content of the amorphous carbon is controlled by adjusting the amount of the amorphous carbon precursor asphalt in Embodiment 13 to Embodiment 15. In step 3), a mass ratio of the graphite primary particles to the amorphous carbon precursor asphalt is 99:1, 88:12, and 82:18.

### (3) Preparation of lithium-ion battery

Preparation of positive electrode plate: the positive active material prepared in embodiments and comparative embodiments, conductive carbon black, and polyvinylidene fluoride (PVDF) are fully stirred and uniformly mixed according to a weight ratio of 96:2:2 in N-methylpyrrolidone to be made into a positive electrode slurry, and then the obtained positive electrode slurry is uniformly coated on one surface of a positive current collector aluminum foil and then dried at 85 °C, and the positive electrode plate with the positive active material layer coated on a single surface is obtained. By repeating the above steps on the other surface of the aluminum foil, the positive electrode plate with the positive active material layers coated on both surfaces is obtained. Then, after cold pressing, slitting, cutting, and welding of a positive electrode tab, the positive electrode plate is obtained, where a porosity of the positive active material layers is adjusted by adjusting the pressure of the cold pressing.

Preparation of negative electrode plate: the negative active material prepared in embodiments and comparative embodiments, a binder styrene-butadiene rubber (SBR), and sodium carboxymethyl cellulose (CMC) are fully stirred and uniformly mixed according to a weight ratio of 97:1.5:1.5 in deionized water to be made into a negative electrode slurry, and then the negative electrode slurry is uniformly coated on one surface of a negative current collector copper foil and then dried at 85 °C, and the negative electrode plate with the negative active material layer coated on a single surface is obtained. By repeating the above steps on the other surface of the copper foil, the negative electrode plate with the negative active material layers coated on both surfaces is obtained. Then, after cold pressing, slitting, cutting, and welding of a negative electrode tab, the negative electrode plate is obtained, where a porosity of the negative active material layers is adjusted by adjusting the pressure of the cold pressing.

Preparation of electrolyte solution: in an argon atmosphere glove box with a water content of < 10 ppm, ethylene carbonate (EC), diethyl carbonate (DEC), and propylene carbonate (PC) are uniformly mixed according to a mass ratio of 3:4:3 to obtain a non-aqueous solvent, and then a lithium salt LiPF₆ is dissolved in the above non-aqueous solvent to obtain an electrolyte solution. Based on the mass of the electrolyte solution, the mass percentage of LiPF₆ is 12.5%.

Preparation of separator: an aluminum oxide ceramic coated porous polyethylene (PE) material is used as a separator, the thickness of an aluminum oxide ceramic coating layer is 2.5 µm, and the thickness of a porous polyethylene layer is 10 µm.

Assembly of lithium-ion battery: the positive electrode plate, the separator and the negative electrode plate are stacked in order, the separator is made to be located between the positive electrode plate and the negative electrode plate to play a role in isolation, the above product is placed in a packaging shell after winding, a copper wire containing a lithium plating is installed as a reference electrode, the electrolyte solution is injected, encapsulation is carried out, and then the final lithium-ion battery is made after the formation.

### Test method

### 1. Cycle performance test

Land CT2001A is used to test the cycle performance at 25 °C. The lithium-ion battery is first charged to 4.6 V at a constant current at a current density of 0.2 C, and then charged at a constant voltage of 4.6 V until the current is less than 50 µA; thereafter, the lithium-ion battery is discharged to 3.0 V at a constant current at a current density of 0.2 C, a discharge capacity of the first cycle is recorded as an initial capacity C0, the above charging and discharging are repeated for 200 cycles, and a discharge capacity of the 200th cycle is recorded as C200, so the cycle capacity retention ratio of the 200th cycle = C200/C0×100%.

### 2. Capacity ratio C1/C2 test

The lithium-ion battery is disassembled to obtain the positive electrode plate, the positive electrode plate is flushed with DMC to remove the positive active material layer on one surface, and the positive electrode plate with the positive active material layer on one surface is obtained. The single-sided positive electrode plate and lithium metal are paired, and are separated by a PE separator, an appropriate amount of electrolyte solution is added dropwise, and a button cell is made. Test is carried out under the conditions of a voltage from 3.0 V to 4.7 V and a current density of 10 mA/g. The capacity in the voltage range of 4.6 V to 4.7 V is C1, the capacity in the voltage range of 4.5 V to 4.6 V is C2, and the capacity ratio = C1/C2.

### 3. Potential test

The lithium-ion battery is charged to 4.55 V at a constant current at a current density of 0.2 C and then is charged at a constant voltage of 4.55 V until the current is less than 0.025 C, and a potential difference between the positive electrode and the reference electrode at this time is tested, i.e., the potential V1 of the positive electrode. Then, the lithium-ion battery is discharged to 3.0V at a constant current at a current density of 0.2 C, the above charging and discharging are repeated for 200 cycles, the potential V2 of the positive electrode at the 200th cycle is tested, and the positive electrode potential change/30 cycles = 30 × |V2-V1| / 200.

### 4. Test of element content of positive electrode

The lithium-ion battery is fully discharged below 3.5 V at a current density of 10 mA/cm², left to stand for 10 min and then disassembled in a glove box to obtain the positive electrode plate; the positive electrode plate is transferred into a chamber of a scanning electron microscope equipped with a focused ion beam (model: FEI Vion Plasma FIB), and processed to obtain a sample that can be analyzed by a scanning transmission electron microscopy (STEM, model: FEI Titan3 G2 60-300) analysis. The sample surface is required to be protected with Pt and processed with a Ga ion beam, and a sample thickness is no more than 100 nm; and the sample is cleaned in a low voltage mode to remove residual surfaces from sample processing.

The sample is observed under the STEM and data are collected using X-ray energy dispersive analysis (EDS) at an appropriate magnification; and the contents of elements in the first region of the surface of the positive active material and in the substrate are obtained. Data from at least 3 different locations are collected, and an average value is taken.

### 5. Test of nitrogen and boron elements of negative active material

Contents of nitrogen and boron elements in the second region of the surface of the negative active material are analyzed using an X-ray photoelectron spectrometer (XPS).

The lithium-ion battery is fully discharged to below 3.5V at a current density of 10 mA/cm², left to stand for 10 min and then disassembled in a glove box to obtain the negative electrode plate, the negative electrode plate is immersed in DMC, the negative active material layer is peeled off from the surface of the negative current collector copper foil, and then placed in a muffle furnace to be sintered in an air atmosphere at 500 °C for 4 h, and finally the negative active material powder is obtained. A powder sample is glued onto the double-sided carbon conductive adhesive, a sample mass is 2 mg, and the sample is put into a sample chamber for testing after being prepared. The content of the elements in the second region of the surface of the negative active material is obtained through the test.

### 6. XRD (X-ray powder diffraction)

The positive active material powder is characterized on a Bruker X-ray powder diffractometer, diffraction peaks in the range of 10° to 80° are collected at a collection speed of 1 °/min. The 2θ value of the strongest peak between 18° and 20° in the obtained XRD diagram is recorded as σ₁.

After the lithium-ion battery is cycled for 200 cycles according to the method in 1, the lithium-ion battery is disassembled in a glove box or a dry room, the center part of the positive electrode plate is selected and cut to obtain a sheet of 3 cm × 3 cm in size, the sheet is characterized on the Bruker X-ray powder diffractometer in the same method as described above, and the 2θ value of the strongest peak between 18° and 20° after cycling is obtained and recorded as σ₂. XRD shift/30 cycles = 30 × |σ₁-σ₂| / 200.

### 7. Test of content of amorphous carbon

A thermal gravimetric analyzer (STA449F3-QMS403C, NETZSCH, Germany) is used to test the weight of the amorphous carbon layer coated on the graphite surface, and the specific test method is to take an appropriate amount of negative active material powder samples into a crucible, and then the temperature is increased from 30 °C to 700 °C under a nitrogen atmosphere at a rate of 5 °C/min, the mass of the sample at this place is recorded as m0, the atmosphere is switched to carbon dioxide at this temperature until the sample mass tested by the thermal gravimetric analyzer no longer changes and is recorded as m1, the weight m of the amorphous carbon = m0 - m1. The mass percentage of the amorphous carbon = (m0 - m1) / m0 × 100%.

The negative active material powder is obtained by the means in 5 above.

### 8. Test method for porosity of positive active material layer and negative active material layer

A Micromeritics true density analyzer (ACCUPYC II 1345) produced by Micromeritics in the United States is adopted, and a gas displacement method is used for the test. The percentage of the pore volume in the active material layers to the total volume of the active material layers is the porosity of the active material layers, the calculation formula is P = (V-V0) / V × 100%, V0 denotes the true volume, and V denotes the apparent volume. The gas pressure value used for the test is 19.5 PSI.

### 9. Test method for pore diameter and pore volume distribution

The sample is dehydrated under a vacuum condition at 200 °C for more than 6 h. The instrument used for the nitrogen adsorption/desorption isotherms in this experiment is a Micromeritics ASAP2020 adsorption instrument, the test conditions are carried out at 77 K, the relative pressure is controlled between 0.05 and 0.35, nitrogen adsorption and desorption test is carried out on materials, and the pore diameter distribution and the pore volume of the materials are calculated according to a BJH method.

### Test result

**Table 2**

| Embodiment and Comparative Embodiment | Active material layer | | | Positive active material | | | | Negative active material | | | | Lithium-ion battery | | |
|---|---|---|---|---|---|---|---|---|---|---|---|---|---|---|
| | P_{negative} | Pₚₒₛᵢₜᵢᵥₑ | P_{negative}/ Pₚₒₛᵢₜᵢᵥₑ | BET m²/g | M1 element | Specific substance containing M1 element | Molar percentage X of M1 element in first region | Pore volume V of mesopore cm³/g | Molar percentage of nitrogen element | Molar percentage of boron element | Molar percentage Y of nitrogen + boron | Cycle capacity retention ratio | positive electrode potential change mV/30 cycles | Positive electrode XRD shift °/30 cycles |
| Embodiment 1 | 30% | 12% | 2.50 | 0.13 | Al+Mg | MgF₂+AlF₃ | 1.98% | 0.03 | 0.15% | 0.15% | 0.30% | 93.20% | 0.16 | 0.04 |
| Embodiment 2 | 20% | | 1.67 | | | | | 0.01 | | | | 79.9% | 0.39 | 0.08 |
| Embodiment 3 | 42% | | 3.50 | | | | | 0.07 | | | | 82.1% | 0.27 | 0.11 |
| Comparative Embodiment 1 | 13% | | 1.08 | | | | | 0.12 | | | | 46.40% | 0.71 | 0.22 |
| Embodiment 1 | 30% | 12% | 2.50 | 0.13 | Al+Mg | MgF₂+AlF₃ | 1.98% | 0.03 | 0.15% | 0.15% | 0.30% | 93.20% | 0.16 | 0.04 |
| Embodiment 11 | | 9% | 3.33 | | | | | | | | | 77.20% | 0.47 | 0.15 |
| Embodiment 12 | | 18% | 1.67 | | | | | | | | | 79.60% | 0.39 | 0.10 |
| Embodiment 4 | 30% | 22% | 1.36 | 0.34 | | | | 0.03 | | | | 75.90% | 0.41 | 0.19 |
| Embodiment 18 | 46% | 22% | 2.09 | 0.34 | | | | 0.12 | | | | 62.2% | 0.48 | 0.14 |
| Comparative Embodiment 2 | 42% | 9% | 4.67 | 0.13 | | | | 0.07 | | | | 54.5% | 0.56 | 0.17 |
| Embodiment 1 | 30% | 12% | 2.50 | 0.13 | Al+Mg | MgF₂+AlF₃ | 1.98% | 0.03 | 0.15% | 0.15% | 0.30% | 93.20% | 0.16 | 0.04 |
| Embodiment 5 | | | | | Al | AlPO₄ | 1.96% | | 0.15% | 0.15% | 0.30% | 82.50% | 0.36 | 0.08 |
| Embodiment 6 | | | | | La+Nb+ Ca | La₂O₃+Nb₂O₅+ Ca₃(PO₃)₄ | 2.08% | | 0.15% | 0.15% | 0.30% | 86.80% | 0.25 | 0.07 |
| Embodiment 7 | | | | | Al+Mg | MgF₂+AlF₃ | 0.51% | | 0.15% | 0.15% | 0.30% | 70.90% | 0.37 | 0.07 |
| Embodiment 8 | | | | | Al+Mg | MgF₂+AlF₃ | 7.98% | | 0.15% | 0.15% | 0.30% | 76.30% | 0.34 | 0.06 |
| Embodiment 9 | | | | | Al+Mg | MgF₂+AlF₃ | 1.98% | | 0.01% | 0.00% | 0.01% | 70.10% | 0.37 | 0.06 |
| Embodiment 10 | | | | | Al+Mg | MgF₂+AlF₃ | 1.98% | | 0.35% | 0.15% | 0.50% | 73.30% | 0.49 | 0.20 |
| Comparative Embodiment 3 | | | | | - | - | - | | - | - | - | 47.70% | 0.77 | 0.71 |

According to the data of Embodiment 1 to Embodiment 12, Embodiment 18 and Comparative Embodiment 1 to Comparative Embodiment 3 in Table 2, it can be seen that the ratio relationship between the porosity of the positive active material layer and the porosity of the negative active material layer, as well as the content of the M1 element in the first region of the surface of the positive active material, cause changes in the actual potential of the positive electrode, which then leads to differences in the cycle performance. When P_{negative}/Pₚₒₛᵢₜᵢᵥₑ is too small, a sharp increase in polarization is easily caused, and the potential of the positive electrode is constantly raised, making the potential of each cycle raise highly and accelerating the decline of the cycle performance. When P_{negative}/Pₚₒₛᵢₜᵢᵥₑ is too large, the porosity of the positive active material layer is relatively too low, causing insufficient infiltration of the electrolyte solution, and the by-products will soon plug the pores, leading to a sharp increase in polarization, accelerating the raising rate of the potential of the positive electrode, and accelerating the decline of the cycle performance. In addition, by controlling the content of the M1 element in the first region of the surface of the positive active material within the range of this application, the decline rate of the surface of the positive active material can be reduced, so that a decline rate of the negative electrode matches that of the positive electrode in the high-voltage cycling process, an excessively rapid increase in the polarization of the positive electrode is inhibited, and the cycle life of the lithium-ion battery under a high voltage is greatly prolonged.

According to the data of Embodiment 1 to Embodiment 4 and Embodiment 18 in Table 2, it can be seen that Embodiment 1 to Embodiment 4, in which the pore volume V of the mesopores is in the range of 0.01 cm³/g to 0.07 cm³/g, have a more excellent high-voltage cycle performance. The possible reason is that a certain amount of mesopores is conducive to rapid intercalation of the lithium ions into the graphite layer through the mesopores, thereby alleviating the polarization caused by the accumulation of the lithium ions at the interface, lowering the voltage of the positive electrode material under a high-voltage system, and thereby facilitating the cycling. When the pore volume of the mesopores is greater than 0.07 cm³/g, a specific surface area of the negative active material is increased, and a reaction interface between the surface of the negative active material and the electrolyte solution is increased, resulting in an increase of a lithium amount consumed by initial formation of an SEI film and destruction and repairing of an SEI in the cycling process, and thus, the potential of the positive electrode is raised, and the cycle performance is reduced.

**Table 3**

| Embodiments | Negative active material | Lithium-ion battery |
|---|---|---|
| | Content of amorphous carbon | Cycle capacity retention ratio |
| Embodiment 1 | 1.3% | 93.20% |
| Embodiment 13 | 0.5% | 91.50% |
| Embodiment 14 | 5.0% | 86.30% |
| Embodiment 15 | 7.90% | 61.30% |

| | | |
|---|---|---|
| Note: The preparation of the lithium-ion battery and remaining parameters in Embodiment 13 to Embodiment 15 are consistent with those in Embodiment 1 | | |

According to the data in Table 3, it can be seen that the lithium-ion battery has a better high-voltage cycling performance when the content of the amorphous carbon of the negative active material (graphite) is within a certain range. The content of the amorphous carbon affects the electrical conductivity of graphite as well as the surface SEI growth of the graphite in the cycling process. When the content of the amorphous carbon is low, the electrolyte solution reacts with fewer functional groups on the graphite surface to generate a relatively thin SEI film. The thin SEI film is likely to rupture in the lithium intercalation process, so more lithium is needed to regenerate the SEI film, resulting in the raising potential of the positive electrode, and reduction of the cycle performance of the lithium-ion battery. At the same time, when the content of the amorphous carbon is low, embeddable channels for the lithium ions intercalated in the graphite are fewer, and large concentration polarization is easily formed on the graphite surface, resulting in a large potential difference at the positive electrode, and reduction of the cycle performance of the lithium-ion battery. When the content of the amorphous carbon is too high, there are too many functional groups on the graphite surface that can react with the electrolyte solution, so more active lithium needs to be consumed to generate the SEI film, which also causes the potential of the positive electrode to raise highly and reduces the cycle performance of the lithium-ion battery. In addition, the structure of the amorphous carbon on the graphite surface is not as stable as that of the graphite layer, and is likely to collapse after many cycles, which will further reduce the cycle performance of the lithium-ion battery.

**Table 4**

| Embodiment and Comparative Embodiment | Positive active material | | | | | Lithium-ion battery | | |
|---|---|---|---|---|---|---|---|---|
| | Doped eleme nt | Mass percentage of doped element | Coated M1 element | Molar percentage X of M1 element | Gram capacity mAh/g | C1 mAh /g | C2 mAh /g | C1/ C2 |
| Embodiment 1 | Al | 1.40% | Al, Mg | 1.98% | 194 | 26 | 15 | 1.73 |
| Embodiment 16 | Al | 1.50% | Se | 0.62% | 199 | 19 | 12 | 1.58 |
| Embodiment 17 | La, Mn, Ni | 2.50% | Zr, S, W | 1.47% | 190 | 29 | 16 | 1.81 |
| Comparative Embodiment 3 | Al | 1.40% | - | - | 188 | 16 | 15 | 1.07 |
| Comparative Embodiment 4 | - | - | - | - | 182 | 12 | 4 | 3.00 |

The preparation of the lithium-ion battery and remaining parameters in Embodiment 16 to Embodiment 17 are consistent with those in Embodiment 1

According to the data in Table 4, it can be seen that the doping or coating of the elements in the positive active material affects the utilization of the capacity. Reasonable use of different elements for doping and coating can improve the stability of the positive active material, so that the positive active material still has a complete structure under a high voltage and can utilize the capacity. When no element is used for doping or coating modification, the stability of the positive active material is decreased, the structure is rapidly destabilized under the high voltage, and thus the capacity cannot be utilized.

While some exemplary implementations of this application have been illustrated and described, however, this application is not limited to the disclosed implementations. Rather, one of ordinary skill in the art will recognize that some modifications and changes may be made to the described implementations without departing from the spirit and scope of this application as described in the appended claims.

## Claims

1. An electrochemical device, comprising:
a positive electrode, wherein the positive electrode comprises a positive active material layer, the positive active material layer comprises a positive active material, the positive active material comprises a first substrate and a first region disposed on a surface of the first substrate, and based on a molar content of a Co element in the first region, a molar percentage X of an M1 element in the first region is ≥ 0.5%, wherein M1 comprises at least one of aluminum, magnesium, titanium, zirconium, manganese, lutetium, barium, nickel, lanthanum, yttrium, niobium, tungsten, calcium, sodium, selenium, or sulfur; and
a negative electrode, wherein the negative electrode comprises a negative active material layer, and the negative active material layer comprises a negative active material; wherein
the electrochemical device satisfies: 1.3 ≤ P_{negative}/Pₚₒₛᵢₜᵢᵥₑ ≤ 3.5, wherein P_{negative} is a porosity of the negative active material layer, and Pₚₒₛᵢₜᵢᵥₑ is a porosity of the positive active material layer.

2. The electrochemical device according to claim 1, wherein the negative active material comprises a second substrate and a second region disposed on a surface of the second substrate, and based on a molar content of a C element in the second region, a molar percentage Y of an M2 element in the second region is ≤ 0.6%, wherein M2 comprises nitrogen and/or boron.

3. The electrochemical device according to claim 1, wherein the negative active material comprises mesopores, a pore diameter of the mesopores is from 2 nm to 50 nm, and based on a mass of the negative active material, a pore volume of the mesopores is V cm³/g, wherein 0.01 ≤ V ≤ 0.07.

4. The electrochemical device according to claim 1, wherein the negative active material comprises amorphous carbon, and based on a mass of the negative active material, a mass percentage of the amorphous carbon is from 0.5% to 5%.

5. The electrochemical device according to claim 1, wherein the first region comprises at least one of a metal oxide, a metal phosphate, a metal fluoride or a non-metallic simple substance.

6. The electrochemical device according to claim 5, wherein the positive active material satisfies at least one of the following conditions (a) to (e):
(a) the metal oxide comprises at least one of Al₂O₃, MgO, TiO₂, La₂O₃, Y₂O₃, ZrO₂, WO₃, MnO₂ or Ni₂O₃;
(b) the metal phosphate comprises at least one of Li₃PO₄, AlPO₄, Ca₃(PO₄)₂ or Na₃PO₄;
(c) the metal fluoride comprises at least one of AlF₃, MgF₂, CaF₂ or LiF;
(d) the non-metallic simple substance comprises an Se simple substance and/or an S simple substance; or
(e) a total mole number of metal elements other than Li in the first substrate is n_{M}, a mole number of an Ni element in the first substrate is n_{Ni}, a mole number of a Co element in the first substrate is n_{Co}, a mole number of an Mn element in the first substrate is n_{Mn}, and a mole number of an R element in the first substrate is n_{R}, 0 ≤ n_{Ni}/n_{M} ≤ 1, 0 ≤ n_{Co}/n_{M} ≤ 1, 0 ≤ n_{Mn}/n_{M} ≤ 1, and 0 ≤ n_{R}/n_{M} ≤ 1, wherein n_{Ni}, n_{Co} and n_{Mn} are not simultaneously 0, and the R element comprises at least one of Na, Al, Mg, Ti, Zr, Nb, Y, Cr, V, Ge, Mo, Fe, Cu, Zn, Ga, Ag, W, In, Sn, Pb, Sb, La, Ce, Ca, or Sr.

7. The electrochemical device according to claim 1, wherein 9% ≤ Pₚₒₛᵢₜᵢᵥₑ ≤ 25%, and/or 20% ≤ P_{negative} ≤ 45%.

8. The electrochemical device according to claim 1, wherein the positive active material has a specific surface area of ≤ 0.5 m²/g.

9. The electrochemical device according to claim 1, wherein the positive electrode is assembled with lithium metal to form a button cell, the button cell has a capacity of C1 in a voltage range of 4.6 V to 4.7 V, and the button cell has a capacity of C2 in a voltage range of 4.5 V to 4.6 V, wherein 1.5 ≤ C1/C2 ≤ 2.2.

10. An electronic device, comprising the electrochemical device according to any one of claims 1 to 9.
